# EUROPEAN PATENT SPECIFICATION

(11) **EP 2 071 851 B1**
(45) Date of publication and mention of the grant of the patent: **28.09.2011**
(21) Application number: 07291489.8
(22) Date of filing: 11.12.2007
(51) Int. Cl.: H04N 7/24, H04N 7/26

(54) **Process for delivering a video stream over a wireless channel**
Verfahren zum Zustellen eines Videostroms über einen drahtlosen Kanal
Processus de fourniture d'un flux vidéo sur un canal sans fil

(43) Date of publication of application: 17.06.2009
(73) Proprietor: Alcatel Lucent, 75008 Paris (FR)
(72) Inventor: Leprovost, Yann, 91620 Nozay (FR); Marin, Cédric, 91310 Montlhery (FR)
(74) Representative: Nicolle, Olivier

(56) References cited:
- WO-A-95/16315
- WO-A-2005/094086
- WO-A-2006/099223
- WO-A-2006/122314
- US-A1- 2005 138 532
- US-B1- 6 377 553
- AL-MUALLA M E ET AL: "Multiple-reference temporal error concealment", ISCAS 2001. THE 2001 IEEE INTERNATIONAL SYMPOSIUM ON CIRCUITS AND SYSTEMS (CAT. NO.01CH37196) IEEE PISCATAWAY, NJ, USA; [IEEE INTERNATIONAL SYMPOSIUM ON CIRCUITS AND SYSTEMS],, vol. 5, 6 May 2001 (2001-05-06), pages 149-152, XP010542054, ISBN: 978-0-7803-6685-5

## Description

The invention relates to a process for delivering a video stream over a wireless channel, a video decoder and a radio decoder for implementing said process.

Video stream transmission over a wireless channel consists in encoding a video stream, composed of many video frames, by a video encoder in order to be transmitted to a radio encoder. The video stream is then transmitted as a radio signal over a wireless channel to a radio decoder. The radio decoder changes the signal into bits to transmit it to a video decoder that rebuilds the original video stream.

In a known manner video stream transmission over a wireless channel commonly uses inter frame prediction, also known as motion compensation. This method is used in all already deployed video compression systems and also for recent standards such as H.264 standard.

Video compression consists in predicting a block of a video frame (also called a macroblock in H.264) by translating an area of at least one reference frame using a motion vector. Many types of macroblocks exist. For example, intra predicted macroblock, called I macroblock, is predicted upon spatial neighboring macroblocks of the current frame and P macroblock uses a single independent reference area.

The present invention applies to B macroblock as it is the most efficient method in terms of compression efficiency.

B macroblock uses a bipredictive motion compensation using two reference video areas and two motion vectors. The two predictions are processed independently, each one using its own reference area. The two predicted areas are summed using weight factors.

Each B macroblock can then be used for future prediction and artifact propagation and expansion is due to the fact that frames are predicted upon a previous decoded frame. As a P macroblock could propagate errors contained in a single reference frame, a B macroblock could propagate errors contained in the two reference frames.

A common scheme for handling video artifact propagation is the periodic insertion of I macroblocks, as erroneous macroblocks from previous reference frames are not used in the prediction scheme. Inter frame artifact propagation is then stopped.

This prediction method is not efficient in terms of compression. More often intra macroblocks are refreshed, higher is the protection against inter frame artifact propagation, but lower is compression efficiency as it requires lots of bandwidth.

In this decoding method according to prior art, information from the radio decoder is not used but most wireless transmission systems integrate decoding functions that reduces the bit error rate at input of the video decoder. At video decoder input, a binary stream (i.e. bits threshold) is used; video decoder does not use probabilistic information from the radio decoder (e.g. outputs such as log likelihood ratio associated to macroblocks coded sequence).

The document WO-2005/094086 depicts a decoder which conceals errors in a coded image comprised of a stream of macroblocks by examining each macroblock for pixel errors. If such error exists, then each of at least two macroblocks pictures from each of two different pictures are weighted to yield a weighted prediction for estimating missing/corrupt values to conceal the macroblock found to have pixel errors.

The purpose of the invention is to resolve the problems of the prior art by proposing, in particular, a process for delivering a video stream over a wireless channel using transmission error probability for decoding B macroblock in order to minimize artefact propagation.

For that purpose and according to a first aspect, the invention relates to a process according to claim 1.

According to a second aspect, the invention relates to video decoder according to claim 6

According to a third aspect, the invention relates to a radio decoder according to claim 8

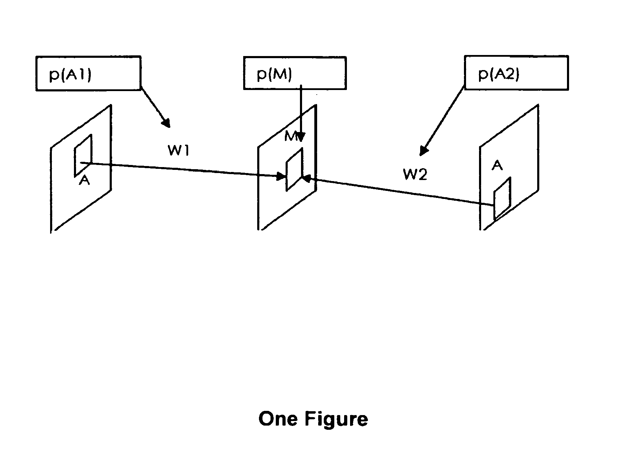

Other aspects and advantages will become apparent in the following description made with reference to the appended figure which represents a B macroblock motion compensation scheme.

The process for delivering a video stream over a wireless channel according to the invention proposes to encode video frames of the video stream by defining partitions of the video frames by a video encoder.

In the described embodiment, the video encoding is achieved according to H.264 standard, notably according to H.264 AVC one and each partition is a, a B macroblock's partition or subpartition as defined in the standard.

As B macroblock uses bipredictive motion compensation, the encoding is done by determining predictions for the partitions, a prediction being based on:
- two reference areas A1, A2 each of independent reference frames of the video stream;
- one motion vector associated to each reference area A1, A2; and
- a weighting factor W1, W2 for each motion vector;

The weighting factor allows determining the contribution of each reference area in the predicted partition. In H.264 standard weighting factor default value is 0,5 for each area, but it can also be explicitly defined.

At this stage, the difference between partition and corresponding predicted partition is done in order to establish a partition residual.

The video encoder forwards the encoded video stream with partition residuals to a radio encoder that transmits it then as a radio signal over a wireless channel to a radio decoder.

The radio decoder comprises means to compute transmission error probability P_{A1}, P_{A2} according to reliability criteria of the transmission of corresponding reference area A1, A2. Such transmission error probability is for example pixels probability.

Reliability criteria can be determined from either:
- log likelihood ratio from the radio decoder; or
- bit error rate estimator; or
- simple Cyclic Redundancy Check computation.

The transmission error probability P_{A1}, P_{A2} can also be computed upon visual metrics on decoded predicted partition.

The encoded video stream with partition residual are transmitted to a video decoder comprising means to decode predicted partition of the video stream by using the two reference areas A1, A2, the motion vectors and weighting factor based on weighting factors W1, W2 balanced by the transmission error probability P_{A1}, P_{A2} computed for each reference area A1, A2.

The weighting factor balanced this way allows taking into consideration how reliable the reference area A1, A2 is. It decreases the importance of a reference area with high error probability that probably contains artefact. Consequently, such prediction in the video decoder allows minimizing video artefacts as well as saving bandwidth.

The video decoder rebuilds then the decoded partition M of the video frame which is formed by combination of decoded predicted partition and corresponding partition residual.

According to the figure, the biprediction algorithm of a decoded partition M is: M = A1 * f(W1, P_{A1}) + A2 * f(W2, P_{A2}), where f(W1, P_{A1}) and f(W2, P_{A2}) are balanced weighting factors upon probabilities.

In a further embodiment, the decoded partition M can be used as reference area for encoding another partition, notably as provided in H.264 AVC.

To keep on minimizing video artefact during the video stream transmission, a transmission error probability associated to this new reference area is computed. The transmission error probability P_{M} of the decoded partition is computed with transmission error probabilities P_{A1}, and P_{A2} balanced with corresponding weighting factor W1, W2, as well as transmission error probability of the partition residual.

Using information concerning previous reference areas A1, A2 and M, such as transmission error probabilities P_{A1}, P_{A2} and P_{M}, allows keeping a trace of reconstructed areas reliability, decreasing future error propagation, and thus, artefacts propagation.

## Claims

1. Process for delivering a video stream over a wireless channel, wherein the video frames of the video stream are encoded by defining partitions of the video frames, said encoding being done by determining predictions for the partitions, a prediction being based on:
- two reference areas (A1, A2) each of independent reference frames of the video stream;
- one motion vector associated to each reference area (A1, A2); and
- a weighting factor (W1, W2) for determining the contribution of each reference area (A1, A2) in the predicted partition;
wherein the difference between partition and corresponding predicted partition is done in order to establish a partition residual, the encoded video stream with partition residuals are transmitted to a video decoder in order to decode predicted partition of the video stream by using the two reference areas (A1, A2), the motion vectors and weighting factor based on encoded weighting factor (W1, W2) the process being **characterized in that** the weighting facor (W1, W2) is balanced by a transmission error probability (P_{A1}, P_{A2}) computed for each reference area (A₁, A₂), the decoded partition (M) of the video frame being formed by combination of the video decoded predicted partition and corresponding partition residual, and the transmission error probability (P_{A1}, P_{A2}) is computed upon radio decoding of the transmission, said computing being done according to reliability criteria of the transmission of the corresponding reference area (A1, A2), or the transmission error probability (P_{A1}, P_{A2}) is computed upon visual metrics on video decoded predicted partition.

2. Process according to claim 1, wherein the video encoding is achieved according to H.264 standard, notably according to H.264 AVC one.

3. Process according to claim 2, wherein each partition is a B macroblock as defined in the standard.

4. Process according to any of claims 1 to 3 wherein transmission error probability is computed upon radio decoding and the reliability criteria is determined from either:
- log likelihood ratio from the radio decoder; or
- bit error rate estimator; or
- simple Cyclic Redundancy Check computation.

5. Process according to any of claims 1 to 4, wherein a decoded partition (M) is used as reference area for encoding another partition, the transmission error probability (P_{M}) of the decoded partition (M) being computed with transmission error probabilities (P_{A1} and P_{A2}) balanced with corresponding weighting factor (W1, W2), as well as transmission error probability of the partition residual.

6. Video decoder destined to be used for implementing the process according to any of previous claims, said video decoder comprising means to decode predicted partition of the video stream by using the two reference areas (A1, A2), the motion vectors and weighting factor based on encoded weighting factor (W1, W2) balanced by the transmission error probability (P_{A1}, P_{A2}) computed for each reference area (A₁, A₂), and means to form decoded partition (M) of the video frame by combination of video decoded predicted partition and corresponding partition residual.

7. Video decoder according to claim 6, comprising means to compute the transmission error probability upon visual metrics on video decoded predicted partition.

8. Radio decoder for decoding a video stream over a wireless channel, said radio decoder being destined to be connected with a video decoder according to claim 6, said radio decoder comprising means to compute the transmission error probability (P_{A1}, P_{A2}) according to reliability criteria of the transmission of corresponding reference area (A1, A2).

## Patentansprüche

1. Verfahren zum Zustellen eines Videostroms über einen drahtlosen Kanal, wobei die Videorahmen des Videostroms durch das Definieren von Partitionen der Videorahmen codiert werden, wobei das besagte Codieren durch das Bestimmen von Prädiktionen für die Partitionen erfolgt, wobei eine Prädiktion basiert auf:
- zwei Referenzbereichen (A1, A2) mit jeweils unabhängigen Referenzrahmen des Videostroms;
- einem Bewegungsvektor, welcher mit jedem Referenzbereich (A1, A2) assoziiert ist; und
- einem Gewichtungsfaktor (W1, W2) zum Bestimmen des Beitrags eines jeden Referenzbereichs (A1, A2) in der prädizierten Partition;
wobei die Differenz zwischen der Partition und der entsprechenden prädizierten Partition gemacht wird, um einen Partitionsrest festzulegen, wobei der codierte Videostrom mit Partitionsresten an einen Video-Decoder übertragen wird, um die prädizierte Partition des Videostroms unter Verwendung der beiden Referenzbereiche (A1, A2), der Bewegungsverktoren und des Gewichtungsfaktors basierend auf dem codierten Gewichtungsfaktor (W1, W2) zu decodieren, wobei das Verfahren **dadurch gekennzeichnet ist, dass** der Gewichtungsfaktor (W1, W2) anhand einer für jeden Referenzbereich (A1, A2) berechneten Übertragungsfehlerwahrscheinlichkeit (PA1, PA2) abgeglichen wird, wobei die decodierte Partition (M) des Videorahmens durch die Kombination der decodierten prädizierten Partition und des entsprechenden Partitionsrestes gebildet wird, und wobei die Übertragungsfehlerwahrscheinlichkeit (P_{A1}, P_{A2}) nach der Radio-Decodierung der Übertragung berechnet wird, wobei die besagte Berechnung gemäß den Zuverlässigkeitskriterien der Übertragung der entsprechenden Referenzbereiche (A1, A2) erfolgt, oder die Übertragungsfehlerwahrscheinlichkeit (P_{A1}, P_{A2}) nach visuellen Metriken auf der prädizierten videodecodierten Partition berechnet wird.

2. Verfahren nach Anspruch 1, wobei die Videocodierung gemäß dem Standard H.264, insbesondere gemäß dem Standard H.264 AVC eins, erfolgt.

3. Verfahren nach Anspruch 2, wobei jede Partition ein B-Makroblock, wie im Standard definiert, ist.

4. Verfahren nach einem beliebigen der Ansprüche 1 bis 3, wobei die Übertragungsfehlerwahrscheinlichkeit nach der Radio-Decodierung errechnet wird und die Zuverässigkeitskriterien aus entweder:
- dem logarithmischen Wahrscheinlichkeitsverhältnis aus dem Radio-Decoder; oder
- dem Bitfehlerraten-Schätzer; oder
- der einfachen zyklischen Redundanzprüfungsberechnung
ermittelt werden.

5. Verfahren nach einem beliebigen der Ansprüche 1 bis 4, wobei die decodierte Partition (M) als Referenzbereich für das Codieren einer anderen Partition verwendet wird, wobei die Übertragungsfehlerwahrscheinlichkeit (P_{M}) der decodierten Partition (M) anhand der mit dem entsprechenden Gewichtungsfaktor (W1, W2) abgeglichenen Übertragungsfehlerwahrscheinlichkeiten (P_{A1} u n d P_{A2}) sowie einer Übertragungsfehlerwahrscheinlichkeit des Partitionsrestes errechnet wird.

6. Video-Decoder, bestimmt für die Verwendung zur Implementierung des Verfahrens nach einem beliebigen der vorstehenden Ansprüche, wobei der besagte Video-Decoder Mittel zum Decodieren der prädizierten Partition des Videostroms unter Verwendung der beiden Referenzbereiche (A1, A2), der Bewegungsvektoren und des Gewichtungsfaktors, weicher auf dem mit der für jeden Referenzbereich (A1, A2) berechneten Übertragungsfehlerwahrscheinlichkeit (P_{A1}, P_{A2}) abgeglichenen codierten Gewichtungsfaktor (W1, W2) basiert, sowie Mittel zum Bilden der decodierten Partition (M) des Videorahmens durch Kombinieren der prädizierten videodecodierten Partition und des entsprechenden Partitionsrestes umfasst.

7. Video-Decoder nach Anspruch 6, umfassend Mittel zum Berechnen der Übertragungsfehlerwahrscheinlichkeit auf der Basis von visuellen Metriken auf der prädizierten videodecodierten Partition.

8. Radio-Decoder zum Decodieren eines Videostroms über einen drahtlosen Kanal, wobei der besagte Radio-Decoder für den Anschluss an einen Video-Decoder gemäß Anschluss 6 bestimmt ist, wobei der besagte Radio-Decoder Mittel zum Berechnen der Übertragungsfehlerwahrscheinlichkeit (P_{A1}, P_{A2}) gemäß den Zuverlässigkeitskriterien der Übertragung des entsprechenden Referenzbereichs (A1, A2) umfasst.

## Revendications

1. Processus pour délivrer un flux vidéo sur un canal sans fil, selon lequel les trames vidéo du flux vidéo sont codées en définissant des partitions des trames vidéo, ledit codage étant réalisé en déterminant des prédictions pour les partitions, une prédiction étant basée sur :
- deux zones de référence (A1, A2), chacune des trames de référence indépendantes du flux vidéo ;
- un vecteur de mouvement associé avec chaque zone de référence (A1, A2) ; et
- un facteur de pondération (W1, W2) pour déterminer la contribution de chaque zone de référence (A1, A2) dans la partition prédite ;
la différence entre la partition et la partition prédite correspondante étant réalisée afin d'établir un résiduel de partition, les flux vidéo codés avec les résiduels de partition étant transmis à un décodeur vidéo afin de décoder la partition prédite dans le flux vidéo en utilisant les deux zones de référence (A1, A2), les vecteurs de mouvement et le facteur de pondération étant basés sur un facteur de pondération codé (W1, W2), le processus étant **caractérisé en ce que** le facteur de pondération (W1, W2) est équilibré par une probabilité d'erreur de transmission (PA1, PA2) calculée pour chaque zone de référence (A1, A2), la partition décodée (M) de la trame vidéo étant formée par combinaison de la partition prédite décodée par vidéo et du résiduel de partition correspondant, et la probabilité d'erreur de transmission (P_{A1}, P_{A2}) étant calculée lors du décodage radio de la transmission, ledit calcul étant réalisé conformément à un critère de fiabilité de la transmission de la zone de référence (A1, A2) correspondante ou la probabilité d'erreur de transmission (P_{A1}, P_{A2}) étant calculée lors de mesures visuelles sur la partition prédite décodée par vidéo.

2. Processus selon la revendication 1, selon lequel le codage vidéo est réalisé conformément à la norme H.264, notamment conformément à la norme H.264 AVC.

3. Processus selon la revendication 2, selon lequel chaque partition est un macrobloc B tel que défini dans la norme.

4. Processus selon l'une quelconque des revendications 1 à 3, selon lequel la probabilité d'erreur de transmission est calculée lors du décodage radio et le critère de fiabilité est déterminé à partir :
- du rapport de probabilité de connexion du décodeur radio ; ou
- d'un dispositif d'estimation du taux d'erreurs binaires ; ou
- du simple calcul de contrôle de redondance cyclique.

5. Processus selon l'une quelconque des revendications 1 à 4, selon lequel une partition de décodeur (M) est utilisée comme zone de référence pour coder une autre partition, la probabilité d'erreur de transmission (P_{M}) de la partition décodée (M) étant calculée avec des probabilités d'erreur de transmission (P_{A1} et P_{A2}) équilibrées avec le facteur de pondération correspondant (W1, W2) ainsi que la probabilité d'erreur de transmission du résiduel de partition.

6. Décodeur vidéo destiné à être utilisé pour mettre en oeuvre le processus selon l'une quelconque des revendications précédentes, ledit décodeur vidéo comprenant des moyens pour décoder la partition prédite du flux vidéo en utilisant les deux zones de référence (A1, A2), les vecteurs de mouvement et le facteur de pondération en se basant sur le facteur de pondération codé (W1, W2) équilibré par la probabilité d'erreur de transmission (P_{A1}, P_{A2}) calculée pour chaque zone de référence (A1, A2), et des moyens pour former la partition décodée (M) de la trame vidéo par combinaison de la partition prédite décodée par vidéo et le résiduel de partition correspondant.

7. Décodeur vidéo selon la revendication 6, comprenant des moyens pour calculer la probabilité d'erreur de transmission lors des mesures visuelles sur la partition prédite décodée par vidéo.

8. Décodeur radio pour décoder un flux vidéo sur un canal sans fil, ledit décodeur radio étant destiné à être connecté avec un décodeur vidéo selon la revendication 6, ledit décodeur radio comprenant des moyens pour calculer la probabilité d'erreur de transmission (P_{A1}, P_{A2}) conformément à un critère de fiabilité de la transmission de la zone de référence correspondante (A1, A2).
